Europäisches Patentamt

European Patent Office

Office européen des brevets

(11) Numéro de publication: **0 283 393**
**A1**

## (12) DEMANDE DE BREVET EUROPEEN

(21) Numéro de dépôt: 88400589.3

(22) Date de dépôt: 11.03.88

(51) Int. Cl.⁴: **G 06 F 7/50**

(30) Priorité: 18.03.87 FR 8703758

(43) Date de publication de la demande:
21.09.88 Bulletin 88/38

(84) Etats contractants désignés: **DE FR GB NL**

(71) Demandeur: **ETAT FRANCAIS représenté par le Ministre délégué des Postes et Télécommunications (CENTRE NATIONAL D'ETUDES DES TELECOMMUNICATIONS) 38-40 rue du Général Leclerc F-92131 Issy-les-Moulineaux (FR)**

(72) Inventeur: **Hmida, Hedi**
**59, rue de l'Amiral Roussin**
**F-75015 Paris (FR)**

**Duhamel, Pierre**
**9, rue du Général Leclerc**
**F-92130 Issy Les Moulineaux (FR)**

(74) Mandataire: **Plaçais, Jean-Yves et al**
**Cabinet Netter 40, rue Vignon**
**F-75009 Paris (FR)**

(54) Dispositif de calcul binaire.

(57) La présente invention a pour objet un dispositif de calcul binarie, du type comprenant au moins une cellule possédant : une entrée de premiers chiffres binaires ou bits ($A_i$), une entrée de seconds bits ($B_i$), une entrée de report amont ($R_{i-1}$), des premiers moyens (1600) pour engendrer un signal de OU exclusif des deux bits d'entrée ($A_i \oplus B_i$), et son complément ($\overline{A_i \oplus B_i}$), des seconds moyens (1800) pour produire un signal de résultat, des troisièmes moyens (1900) pour produire un signal de report aval ($R_i$) en logique multiplexée.

Selon l'invention, le signal de OU exclusif complémenté des deux bits ($\overline{A_i \oplus B_i}$) est produit par inversion du signal ($A_i \oplus B_i$), ce qui permet de n'utiliser que 15 transistors dans la version la plus réduite du dispositif.

L'invention concerne aussi un dispositif (20) comprenant une cellule d'addition (22) calculant la somme des bits d'entrée et une cellule de soustraction (24) calculant la différence des bits d'entrée. Selon l'invention, les premiers moyens (1600) produisant le signal de OU exclusif ($A_i \oplus B_i$) et son complément sont utilisés en commun par la cellule d'addition (22) et celle de soustraction (24).

FIG.7

EP 0 283 393 A1

**Description**

Dispositif de calcul binaire

La présente invention a pour objet un dispositif de calcul binaire et plus précisément un dispositif permettant le calcul de la somme et/ou de la différence de chiffres binaires ou bits. Elle trouve une application dans la réalisation de systèmes électroniques binaires tels que les additionneurs, les multiplieurs, les diviseurs, les accumulateurs ... etc.

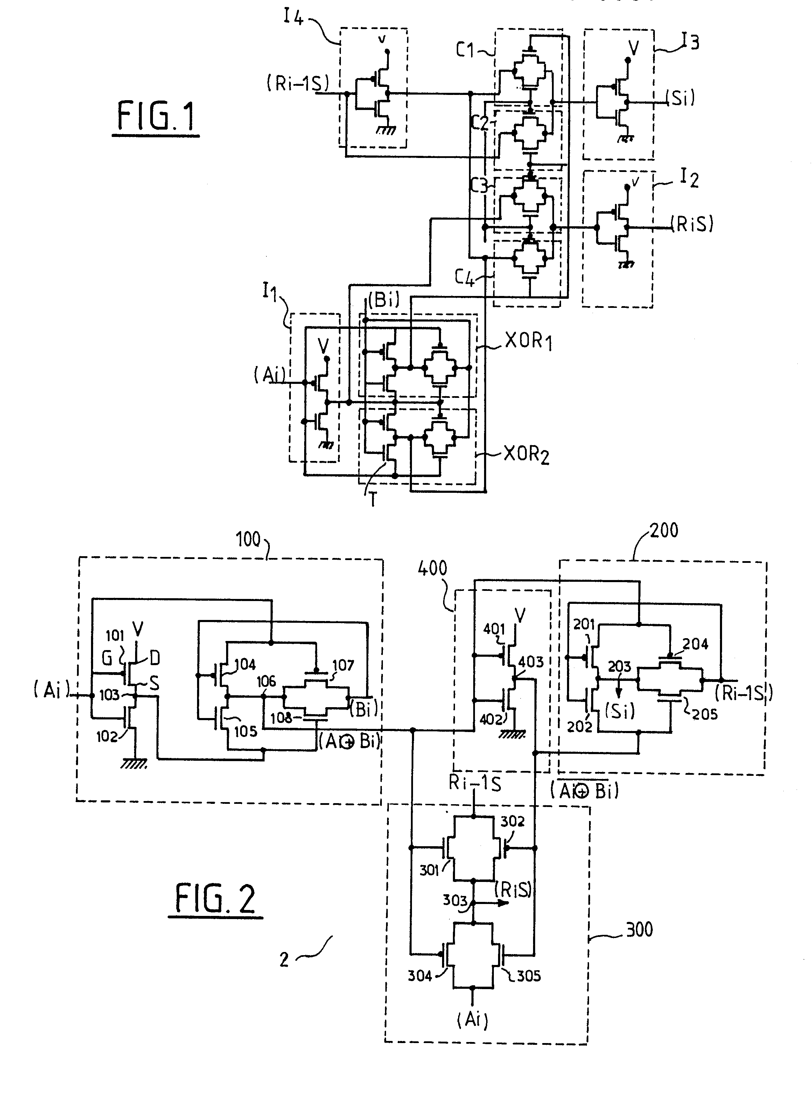

La cellule élémentaire de ces dispositifs est la cellule d'addition ou additionneur. Dans l'article "Principles of CMOS VLSI Design", Addison-Wesley Publishing Company, p. 317-319, de N.H.E. Weste and Kamran Eshraghian est décrit un additionneur complet sur un bit à trois entrées, soit deux entrées opérandes et une entrée de report amont. On a représenté sur la figure 1 un tel additionneur. L'additionneur comprend une entrée de premiers bits ($A_i$), une entrée de seconds bits ($B_i$) et une entrée de report amont ($R_{i-1}S$). L'additionneur produit un signal de résultat ($S_i$) et un signal de report aval ($R_iS$) en utilisant quatre portes inverseurs $I_1$, $I_2$, ..., deux portes OU exclusifs $XOR_1$, $XOR_2$ et quatre portes de transmission $C_1$, $C_2$, ... Les portes inverseurs I changent l'état logique du signal appliqué à l'entrée desdites portes. La porte OU exclusif $XOR_1$ calcule le signal OU exclusif des deux bits d'entrée ($A_i \oplus B_i$) et la porte OU exclusif $XOR_2$ calcule le signal OU exclusif complémenté des deux bits d'entrée ($\overline{A_i \oplus B_i}$). Les portes de transmission $C_1$ et $C_2$ calculent le signal de retenue aval ($R_iS$) et les portes de transmission $C_3$ et $C_4$ calculent le signal de résultant ($S_i$). Les différentes portes sont constituées d'une ou plusieurs paires de transistors T en technologie MOS complémentaires, c'est-à-dire de polarités opposées. Les transistors sont agencés selon la propriété logique de la porte. L'additionneur comporte ainsi 24 transistors.

Cet additionneur n'est pas satisfaisant car il comporte un nombe important de transistors.

L'invention a justement pour but de réduire le nombre de transistors d'un additionneur complet. A cette fin, elle propose une cellule d'addition n'utilisant dans sa version la plus réduite que 15 transistors. Ce but est atteint en n'utilisant qu'une porte OU exclusif (XOR) calculant le signal OU exclusif des deux bits d'entrée ($A_i \oplus B_i$) et en inversant ce signal pour produire le signal OU exclusif complémenté des deux bits ($\overline{A_i \oplus B_i}$).

L'invention porte sur un dispositif de calcul binaire, du type comprenant au moins une cellule possédant :
- une entrée de premiers chiffres binaires ou bits ($A_i$),
- une entrée de seconds bits ($B_i$),
- une entrée de report amont ($R_{i-1}$),
- des premiers moyens pour engendrer un signal de OU exclusif des deux bits d'entrée ($A_i \oplus B_i$) et son complément ($\overline{A_i \oplus B_i}$),
- des seconds moyens pour produire un signal de résultat par une fonction OU exclusif du report amont ($R_{i-1}$) avec le signal de OU exclusif des deux bits ($A_i \oplus B_i$) et son complément ($\overline{A_i \oplus B_i}$),

- des troisièmes moyens pour produire un signal de report aval ($R_i$) par une fonction de transmission comprenant deux portes de transmission commandées par le signal de OU exclusif des deux bits d'entrée ($\overline{A_i \oplus B_i}$) et son complément ($\overline{A_i \oplus B_i}$), l'une des portes permettant le passage du signal report amont ($R_{i-1}$) et l'autre des portes permettant le passage de l'un des deux signaux des bits d'entrée ($A_i, B_i$).

Selon une caractéristique importante de l'invention, le signal de OU exclusif complémenté des deux bits ($\overline{A_i \oplus B_i}$) est produit par l'inversion du signal ($A_i \oplus B_i$).

Selon un mode de réalisation préféré du dispositif de l'invention, les premiers moyens comprennent une première paire de transistors de polarités opposées, la grille de chacun des transistors étant reliée à l'entrée du premier bit ($A_i$), une tension électrique positive étant appliquée au drain de l'un des transistors, la masse étant appliquée à la source de l'autre transistor, la source de l'un des transistors et le drain de l'autre transistor étant reliés à un premier noeud; les premiers moyens comprennent encore une seconde paire de transistors de polarités opposées, le drain de l'un des transistors étant relié à l'entrée du premier bit ($A_i$) et la source de l'autre transistor étant reliée au premier noeud, la grille de chacun des deux transistors étant reliée à l'entrée du second bit ($B_i$), la source de l'un des transistors et le drain de l'autre transistor étant reliés à un second noeud et les premiers moyens comprennent enfin une troisième paire de transistors de polarités opposées, la source de chacun des deux transistors étant reliée au second noeud, le drain de chacun des deux transistors étant relié à l'entrée du second bit ($B_i$), la grille de l'un des transistors étant reliée à l'entrée du premier bit ($A_i$) et la grille de l'autre transistor étant reliée au premier noeud, le signal OU exclusif des deux bits d'entrée étant obtenu au deuxième noeud.

Selon une autre caractéristique de l'invention, pour réaliser l'inversion du signal de OU exclusif des deux bits d'entrée ($A_i \oplus B_i$), les premiers moyens comprennent en outre une paire de transistors de polarités opposées, la grille de chacun des transistors étant reliée au signal de OU exclusif des deux bits d'entrée, une tension électrique positive étant appliquée au drain de l'un des transistors, la masse étant appliquée à la source de l'autre transistor, le signal de OU exclusif complémenté des deux bits d'entrée ($\overline{A_i \oplus B_i}$) étant obtenu au noeud reliant la source de l'un des transistors au drain de l'autre transistor.

Selon un autre mode de réalisation préféré du dispositif de l'invention, les premiers moyens comprennent une première paire de transistors de même polarité, la grille de l'un des transistors étant reliée à l'entrée de premiers bits ($A_i$), la grille de l'autre des transistors étant reliée à l'entrée des seconds bits ($B_i$), une tension électrique étant appliquée au drain de l'un des transistors, la source de l'un des transistors étant reliée au drain de l'autre des transistors, la source de l'autre des transistors étant reliée à un troisième noeud, les premiers moyens comprennent encore une seconde paire de transistors de polarités opposées à celles des transistors de la première paire, le drain de l'un des transistors étant relié à l'entrée de premiers bits ($A_i$), la grille de l'un des transistors étant reliée à l'entrée des seconds bits ($B_i$), le drain de l'autre des transistors étant relié à l'entrée de seconds bits ($B_i$), la grille de l'autre des transistors étant reliée à l'entrée de premiers bits ($A_i$), la source de chacun des transistors étant reliée au troisième noeud, et les premiers moyens comprennent enfin un transistor isolé, la source dudit transistor étant reliée à une tension électrique positive, la grille dudit transistor étant reliée aus signal de OU exclusif des deux bits d'entrée ($A_i \oplus B_i$), le drain dudit transistor étant relié au troisième noeud où est obtenu le signal de OU exclusif complémenté des deux bits d'entrée ($\overline{A_i \oplus B_i}$).

Selon une autre caractéristique de l'invention, pour réaliser l'inversion du signal de OU exclusif des deux bits d'entrée ($A_i \oplus B_i$), les premiers moyens comprennent en outre une paire de transistors de polarités opposées, la grille de chacun des transistors étant reliée au signal de OU exclusif complémenté des deux bits d'entrée ($\overline{A_i \oplus B_i}$), une tension électrique étant appliquée au drain de l'un des transistors, la masse étant appliquée à la source de l'autre des transistors, le signal de OU exclusif des deux bits d'entrée ($A_i \oplus B_i$) étant obtenu au noeud reliant la source de l'un des transistors au drain de l'autre transistor.

Selon un autre aspect de l'invention, pour produire le signal de somme ($S_i$) des trois bits d'entrée ($A_i$),($B_i$) et ($R_{i-1}$), les seconds moyens calculent la somme modulo du premier bit ($A_i$), du second bit ($B_i$) et du report amont ($R_{i-1}$).

Selon un autre aspect de l'invention, pour produire le signal de différence ($D_i$) des trois bits d'entrée ($A_i$),($B_i$) et ($R_{i-1}$), les seconds moyens calculent le complément de la somme modulo du premier bit ($A_i$) du second bit ($B_i$) et du report amont ($R_{i-1}$).

Selon une autre caractéristique de l'invention, pour produire le signal de report aval ($R_i$) associé au signal de résultat du calcul des trois bits ($A_i$),($B_i$) et ($R_{i-1}$) les troisièmes moyens calculent la somme du produit des deux bits, du produit de l'un des deux bits ($A_i,B_i$) par le report ($R_{i-1}$) et du produit de l'autre des deux bits ($A_i,B_i$) par le report amont ($R_{i-1}$).

Selon un autre mode de réalisation préféré du dispositif de l'invention, les deuxièmes moyens comprennent deux paires de transistors de polarités opposées, dans l'une des deux paires la grille de chacun des transistors étant reliée à l'entrée de report amont ($R_{i-1}$), le drain de l'un des transistors étant relié au signal de OU exclusif des deux bits d'entrée ($A_i \oplus B_i$), la source de l'autre transistor étant reliée au complément du signal de OU exclusif des deux bits d'entrée ($\overline{A_i \oplus B_i}$), un signal de résultat étant obtenu à un quatrième noeud reliant la source de l'un des transistors au drain de l'autre transistor, dans l'autre des deux paires, le drain de chacun des transistors étant relié au report amont ($R_{i-1}$), la grille de l'un des transistors étant reliée au signal de OU exclusif des deux bits d'entrée ($A_i \oplus B_i$) et la grille de l'autre des transistors étant reliée au complément du signal de OU exclusif des deux bits d'entrée ($\overline{A_i \oplus B_i}$), le signal de résultat étant obtenu au quatrième noeud reliant la source de chacun des transistors.

Selon encore un autre mode de réalisation préféré du dispositif de l'invention, les troisièmes moyens comprennent deux paires de transistors de polarités opposées, dans l'une : la grille de l'un des transistors étant reliée au signal de OU exclusif des deux bits d'entrée ($A_i \oplus B_i$) et la grille de l'autre transistor étant reliée au complément du signal de OU exclusif des deux bits d'entrée ($\overline{A_i \oplus B_i}$), le drain de chacun des transistors étant relié au report amont ($R_{i-1}$), le signal de report aval ($R_i$) étant obtenu à un cinquième noeud reliant la source de chacun des transistors, dans l'autre des deux paires : la grille de l'un des transistors étant reliée au signal de OU exclusif des deux bits d'entrée ($A_i \oplus B_i$) et la grille de l'autre transistor étant reliée au complément du signal de OU exclusif des deux bits d'entrée ($\overline{A_i \oplus B_i}$), la source de chacun des transistors étant reliée au premier bit d'entrée ($A_i$), le signal de report aval ($R_i$) étant obtenu au cinquième noeud reliant le drain de chacun des transistors.

L'invention a également pour objet un dispositif à plusieurs cellules en parallèle agencées en module additionneur, à report propagé. Selon une caractéristique de cette première variante de l'invention, la première cellule de deux cellules adjacentes comprend un report amont ($R_{i-1}$) et un report aval complémenté ($\overline{R_i}$) et la seconde cellule des deux cellules adjacentes comprend un report amont complémenté ($\overline{R_i}$) et un report aval ($R_{i-1}$).

Selon un mode de réalisation préféré du dispositif à plusieurs cellules, conformément à la première variante de l'invention, le complément ($\overline{R_i}$) du signal de report aval de la première cellule de deux cellules adjacentes et le complément ($\overline{R_i}$) du signal de report amont de la seconde cellule des deux cellules adjacentes sont obtenus respectivement par une paire de transistors de polarités opposées, la grille de chacun des transistors étant reliée au signal de report aval ($R_i$) de la première cellule, respectivement au signal de report amont ($R_i$) de la seconde cellule, une tension électrique étant appliquée au drain de l'un des transistors, la masse étant appliquée à la source de l'autre transistor, le signal de report aval complémenté ($\overline{R_i}$) de la première cellule et le signal de report amont complémenté ($\overline{R_i}$) de la seconde cellule étant respectivement obtenus au noeud reliant la source de l'un des transistors au drain de l'autre transistor.

L'invention a également pour objet un dispositif pour calculer des mots binaires de n bits, dans lequel les bits se présentent séquentiellement en série aux entrées de la cellule. Selon une caractéristique de cette deuxième variante de l'invention, la cellule comprend en outre des quatrièmes moyens pour mémoriser la retenue aval ($R_i$).

Selon une autre caractéristique de la deuxième variante de l'invention, les quatrièmes moyens sont des bascules de type D, la retenue aval ($R_i$) étant

reliée à l'entrée de la bascule et la retenue amont ($R_{i-1}$) étant reliée à la sortie de la bascule.

L'invention a également pour objet un dispositif permettant de calculer simultanément la somme ($S_i$) et la différence ($D_i$) des bits d'entrée.

Selon une caractéristique très importante de cette troisième variante de l'invention, le dispositif comprend une cellule d'addition calculant la somme ($S_i$) des bits d'entrée et une cellule de soustraction calculant la différence ($D_i$) des bits d'entrée, les premiers moyens produisant le signal de OU exclusif ($A_i \oplus B_i$) et son complément étant utilisés en commun par la cellule d'addition et celle de soustraction.

Selon un autre aspect de la troisième variante de l'invention, le dispositif est agencé en modules additionneurs-soustracteurs à report propagé.

Selon un autre aspect de la troisième variante de l'invention, le dispositif est agencé en modules additionneurs-soustracteurs dans lesquels les bits d'entrée se présentent séquentiellement en série aux entrées des cellules.

L'invention a également pour objet un dispositif à plusieurs cellules en parallèle. Selon une caractéristique de la quatrième variante de l'invention, le dispositif est agencé en modules additionneurs et/ou soustracteurs à report anticipé.

D'autres caractéristiques et avantages de l'invention apparaîtront à l'examen de la description détaillée ci-après, ainsi que des dessins annexés, sur lesquels :

- la figure 1 déjà citée représente une vue schématique d'un additionneur complet à trois entrées ($A_i$), ($B_i$) et ($R_{i-1}S$) sur un bit, conformément à l'art antérieur;

- la figure 2 représente une vue schématique d'un additionneur complet à trois entrées ($A_i$),($B_i$) et ($R_{i-1}S$) sur un bit comportant 16 transistors, conformément à l'invention;

- la figure 3 représente une vue schématique d'un additionneur complet à trois entrées ($A_i$),($B_i$) et ($R_{i-1}S$) sur un bit comportant 15 transistors, conformément à l'invention;

- la figure 4 représente une vue schématique d'un additionneur complet à trois entrées ($A_i$),($B_i$) et ($R_{i-1}S$) sur un bit à report propagé comportant 18 transistors, conformément à l'invention;

- la figure 5 représente une vue schématique d'un additionneur complet sur deux bits à report propagé comportant 34 transistors, conformément à l'invention;

- la figure 6 représente une vue schématique d'un additionneur-soustracteur complet à quatre entrées ($A_i$),($B_i$),($R_{i-1}S$) et ($R_{i-1}D$), sur un bit comportant 24 transistors, conformément à l'invention;

- la figure 7 représente une vue schématique d'un additionneur-soustracteur complet à quatre entrées ($A_i$),($B_i$),($R_{i-1}S$) et ($R_{i-1}D$), sur un bit comportant 23 transistors, conformément à l'invention;

- la figure 8 représente une vue schématique d'un additionneur-soustracteur complet à quatre entrées ($A_i$),($B_i$),($R_{i-1}S$) et ($R_{i-1}D$), sur un bit comportant 32 transistors, conformément à l'invention;

- la figure 9 représente une vue schématique d'un additionneur-soustracteur complet à quatre entrées ($A_i$),($B_i$),($R_{i-1}S$) et ($R_{i-1}D$) à report propagé comportant 31 transistors, conformément à l'invention;

- la figure 10 représente une vue schématique d'un additionneur-soustracteur complet sur deux bits comportant 55 transistors;

- la figure 11 représente une vue schématique d'un additionneur complet à trois entrées séquentielles sur un bit comportant 16 transistors, conformément à l'invention;

- la figure 12 représente une vue schématique d'un additionneur complet à trois entrées séquentielles sur un bit comportant 15 transistors, conformément à l'invention;

- la figure 13 représente une vue schématique d'un additionneur-soustracteur complet à quatre entrées ($A_i$),($B_i$),($R_{i-1}S$) et ($R_{i-1}D$) séquentielles sur un bit comportant 24 transistors; et

- la figure 14 représente une vue schématique d'un additionneur-soustracteur complet à quatre entrées ($A_i$),($B_i$),($R_{i-1}S$) et ($R_{i-1}D$) séquentielles sur un bit comportant 23 transistors.

Les dessins annexés comportent à de nombreux titres des informations de caractère certain. En conséquence, ils pourront non seulement permettre de comprendre la description détaillée ci-après, mais aussi contribuer à la définition de l'invention, le cas échéant.

On se réfère à la figure 2 qui illustre schématiquement un additionneur complet à trois entrées sur un bit comportant 16 transistors, conformément à l'invention.

L'additionneur 2 comprend une entrée de premiers bits ($A_i$), une entrée de seconds bits ($B_i$) et une entrée de report amont ($R_{i-1}S$). L'additionneur 2 produit un signal de résultat ($S_i$). Le résultat est la somme des deux bits ($A_i$,$B_i$). Il est obtenu par le calcul de la somme modulo, appelée encore somme OU exclusive, de premiers bits ($A_i$), du second bit ($B_i$) et du report amont ($R_{i-1}S$).

L'additionneur 2 produit un signal de report aval ($R_iS$) associé au résultat du calcul de la somme ($S_i$) des trois bits d'entrée ($A_i$),($B_i$) et ($R_{i-1}S$). Le signal de report aval ($R_iS$) est obtenu par le calcul de la somme du produit des deux bits, du produit de l'un des bits par le report amont ($R_{i-1}S$) et du produit de l'autre des deux bits par le report amont ($R_{i-1}S$).

Pour obtenir ces deux signaux, l'additionneur 2 comprend tout d'abord des premiers moyens 100 pour engendrer un signal de OU exclusif des deux bits d'entrée ($A_i \oplus B_i$). Ces premiers moyens 100 comprennent une paire de transistors 101 et 102 complémentaires de technologie MOS. Le transistor 101 est à canal P et le transistor 102 est à canal N. La grille G de chacun des transistors 101 et 102 est reliée à l'entrée de premier bit ($A_i$). Une tension électrique V est appliquée au drain D du transistor 101. V a une valeur de 5 volts par exemple, dans le cas de transistors en technologie MOS. La masse est appliquée à la source S du transistor 102. La source de transistor 101 et le drain du transistor 102 sont reliés à un premier noeud 103.

Les premiers moyens 100 comprennent encore une seconde paire de transistors 104 et 105 complémentaires de technologie MOS. Le transistor 104 est à canal P et le transistor 105 est à canal N. Le drain du transistor 104 est relié à l'entrée de premiers bits ($A_i$) et la source du transistor 105 est reliée au premier noeud 103. La grille de chacun des transistors 104 et 105 est reliée à l'entrée de seconds bits ($B_i$). La source du transistor 104 et le drain du transistor 105 sont reliés à un second noeud 106.

Les premiers moyens 100 comprennent enfin une troisième paire de transistors complémentaires 107 et 108. Le transistor 107 est à canal P et le transistor 108 est à canal N.

La source des transistors 107 et 108 est reliée au second noeud 106. Le drain des transistors 107 et 108 est relié à l'entrée de seconds bits ($B_i$). La grille du transistor 107 est reliée à l'entrée de premiers bits ($A_i$) et la grille du transistor 108 est reliée au premier noeud 103. Le signal OU exclusif des deux bits d'entrée ($A_i \oplus B_i$) est obtenu au noeud 106.

Les premiers moyens 100 fonctionnent de la façon suivante :

Lorsque le signal de premiers bits ($A_i$) est une tension électrique positive V qui correspond à l'état logique haut, le transistor 101 est bloqué tandis que le transistor 102 est passant. Dans cette configuration, une tension nulle qui correspond à l'état logique bas est obtenue au noeud 103.

Lorsque le signal de premiers bits ($A_i$) est une tension nulle, le transistor 101 est passant tandis que le transistor 102 est bloqué. Dans ce cas, une tension électrique positive est obtenue au noeud 103. La paire de transistors 101 et 102 joue le rôle d'inverseur du signal d'entrée de premier bit ($A_i$).

Quand le signal de premiers bits ($A_i$) est à l'état haut logique, le signal complémenté ($\overline{A_i}$) est à l'état bas logique. La paire des transistors 104 et 105 joue également le rôle d'inverseur, faisant ainsi apparaître le signal complémenté ($\overline{B_i}$) au second noeud 106. La porte de transmission constituée par la paire de transistors 107 et 108 est ouverte.

Quand le signal de premiers bits ($A_i$) est à l'état bas logique, le signal complémenté ($\overline{A_i}$) est à l'état haut logique. La porte de transmission constituée par la paire de transistors 107 et 108 est maintenant fermée, faisant passer ainsi le signal ($B_i$) au noeud 106. La paire de transistors 104 et 105 est inactive. On obtient ainsi au noeud 106 le signal de OU exclusif des deux bits ($A_i \oplus B_i$).

L'additionneur comprend ensuite une paire 400 constituée de transistors de polarités opposées. Cette paire 400 reçoit le signal de OU exclusif des deux bits d'entrée ($A_i \oplus B_i$) délivré par les premiers moyens 100 pour produire l'inversion de ce signal. Les premiers moyens 100 prolongés de la paire 400 constituent un module délivrant le signal ($A_i \oplus B_i$) et son complément ($\overline{A_i \oplus B_i}$). La paire 400 de transistors est constituée d'un transistor 401 à canal P et d'un transistor 402 à canal N. La grille de chacun des transistors 401 et 402 est reliée au signal de OU exclusif des deux bits d'entrée ($A_i \oplus B_i$). Une tension électrique V est appliquée au drain du transistor 401. V a une valeur de 5 volts par exemple dans le cas de transistors en technologie MOS. La masse est appliquée à la source du transistor 402. Le signal de OU exclusif complémenté des deux bits d'entrée ($\overline{A_i \oplus B_i}$) est obtenu au noeud 403 reliant la source du transistor 401 au drain du transistor 402. La paire de transistors 401 et 402 a le même fonctionnement que la paire de transistors 101 et 102 décrite précédemment.

L'additionneur 2 comprend ensuite des seconds moyens 200 pour produire un signal de résultat ($S_i$) par une fonction OU exclusif du report amont ($R_{i-1}S$) avec le signal de OU exclusif des deux bits ($A_i \oplus B_i$) et son complément ($\overline{A_i \oplus B_i}$). Ces seconds moyens 200 comprennent deux paires de transistors de polarités opposées. La première paire est constituée des transistors 201 et 202. Le transistor 201 est à canal P et le transistor 202 est à canal N. La grille de chacun des transistors 201 et 202 est reliée à l'entrée de report amont ($R_{i-1}S$). Le drain du transistor 201 est relié au signal de OU exclusif des deux bits d'entrée ($\overline{A_i \oplus B_i}$). La source du transistor 202 est reliée au complément de signal de OU exclusif des deux bits d'entrée ($A_i \oplus B_i$). Le signal de résultat ($S_i$) est obtenu à un noeud 203 reliant la source du transistor 201 au drain du transistor 202.

La seconde paire est constituée des transistors 204 et 205. Le transistor 204 est à canal P et le transistor 205 est à canal N. Le drain de chacun des transistors 204 et 205 est relié au report amont ($R_{i-1}S$). La grille du transistor 204 est reliée au signal de OU exclusif des deux bits d'entrée ($A_i \oplus B_i$). La grille du transistor 205 est reliée au signal de OU exclusif complémenté des deux bits d'entrée ($\overline{A_i \oplus B_i}$). Le signal de résultat ($S_i$) étant obtenu au noeud 203 reliant la source de chacun des transistors 204 et 205.

Les seconds moyens 200 fonctionnent de la façon suivante :

Quand le signal de OU exclusif des deux bits d'entrée ($A_i \oplus B_i$) est à l'état logique haut, le signal complémenté ($\overline{A_i \oplus B_i}$) est à l'état logique bas. La paire de transistors 201 et 202 joue le rôle d'inverseur, faisant apparaître le signal complémenté ($\overline{R_{i-1}S}$) au noeud 203. La porte de transmission constituée par la paire de transistors 204 et 205 est ouverte.

Quand le signal de OU exclusif des deux bits d'entrée ($A_i \oplus B_i$) est à l'état logique bas, le signal complémenté ($\overline{A_i \oplus B_i}$) est à l'état logique haut. La porte de transmission constituée par la paire de transistors 204 et 205 est maintenant fermée, faisant ainsi apparaître le signal ($R_{i-1}S$) au noeud 203. La paire de transistors 201 et 202 est inactive.

L'additionneur comprend enfin des troisièmes moyens 300 pour produire un signal de report aval ($R_iS$) par une fonction de transmission comprenant deux portes de transmission commandées par le signal de OU exclusif des deux bits d'entrée ($A_i \oplus B_i$) et son complément, l'une des portes permettant le passage du signal de report amont ($R_{i-1}S$) et l'autre des portes permettant le passage de l'un des deux signaux des bits d'entrées ($A_i, B_i$).

Les troisièmes moyens 300 comprennent deux paires de transistors de polarités opposées. La première paire est constituée des transistors 301 et 302. Le transistor 301 est à canal N et le transistor 302 est à canal P. La grille du transistor 301 est reliée au signal de OU exclusif des deux bits $(A_i \oplus B_i)$. La grille du transistor 302 est reliée au complément du signal de OU exclusif des deux bits $(\overline{A_i \oplus B_i})$. Le drain des transistors 301 et 302 est relié au report amont $(R_{i-1}S)$. Le signal de report aval $(R_iS)$ est obtenu au noeud 303 reliant la source des transistors 301 et 302. La seconde paire est constituée des transistors 304 et 305. Le transistor 304 est à canal P et le transistor 305 est à canal N.

La grille du transistor 304 est reliée auf signal de OU exclusif des deux bits $(A_i \oplus B_i)$. La grille du transistor 305 est reliée au complément du signal de OU exclusif des deux bits $(\overline{A_i \oplus B_i})$. La source de chacun des transistors 304 et 305 est reliée au premier bit d'entrée $(A_i)$. Le signal de report aval $(R_iS)$ est obtenu au noeud 303 reliant le drain de chacun des transistors 304 et 305.

Les troisièmes moyens (300) fonctionnent de la façon suivante :

Quand le signal de OU exclusif des deux bits d'entrée $(A_i \oplus B_i)$ est à l'état logique haut, le signal complémenté $(\overline{A_i \oplus B_i})$ est à l'état bas. La porte de transmission constituée par les transistors 301 et 302 est fermée faisant apparaître le signal $(R_{i-1}S)$ au noeud 303. La porte de transmission constituée par la paire de transistors 304 et 305 est inactive.

Quand le signal de OU exclusif des deux bits d'entrée $(A_i \oplus B_i)$ est à l'état logique bas, le signal complémenté $(\overline{A_i \oplus B_i})$ est à l'état haut. La porte de transmission constituée par les transistors 304 et 305 est maintenant fermée, faisant apparaître le signal $(A_i)$ au noeud 303. La paire de transistors 301 et 302 est inactive.

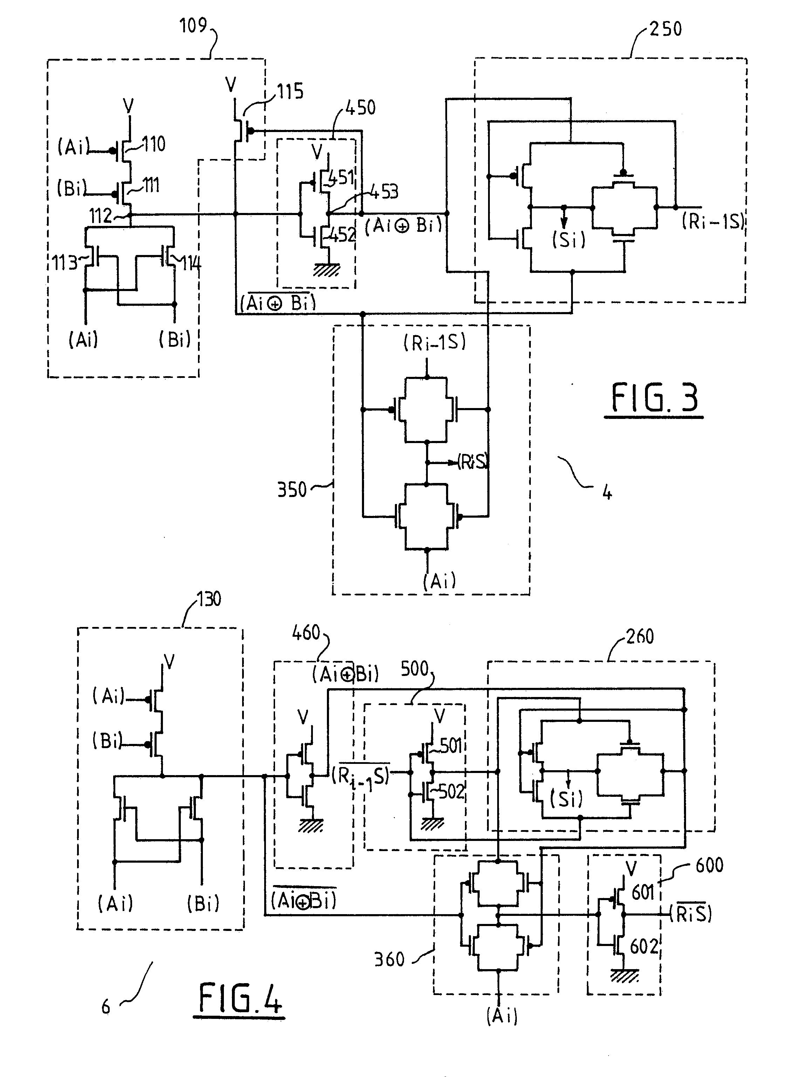

On se réfère maintenant à la figure 3 qui illustre schématiquement un additionneur complet à trois entrées sur un bit comportant 15 transistors conformément à l'invention.

Pour obtenir un additionneur 4 comportant seulement 15 transistors, on modifie les premiers moyens 100 de l'additionneur 2 décrit en référence à la figure 2. Les autres moyens 250, 350 et la paire 450 de l'additionneur 4 sont identiques respectivement aux moyens 200, 300 et 400 de l'additionneur 2 décrit en référence à la figure 2.

Les premiers moyens 109 de l'additionneur 4 comprennent une paire de transistors 110 et 111 à canal P. La grille du transistor 110 est reliée à l'entrée de premiers bits $(A_i)$ et la grille du transistor 111 est reliée à l'entrée de seconds bits $(B_i)$. Une tension électrique V est appliquée au drain du transistor 110. V a une valeur de 5 volts par exemple dans le cas de transistors en technologie MOS. La source du transistor 110 est reliée au drain du transistor 111. La source du transistor 111 est relié à un noeud 112.

Les premiers moyens 109 de l'additionneur 4 comprennent encore une paire de transistors constituée d'un transistor 113 à canal N et d'un transistor 114 à canal N. Le drain du transistor 113 est relié à l'entrée de premiers bits $(A_i)$. La grille du transistor 113 est reliée à l'entrée de seconds bits $(B_i)$. Le drain du transistor 114 est relié à l'entrée de seconds bits $(B_i)$. La grille du transistor 114 est reliée à l'entrée de premiers bits $(A_i)$. Le signal de OU exclusif, complémenté, des deux bits d'entrée $(\overline{A_i \oplus B_i})$ est obtenu au noeud 112 reliant la source de chacun des transistors 113 et 114.

Les premiers moyens 109 de l'additionneur 4 comprennent enfin un transistor 115 à canal P. La source du transistor 115 est reliée au noeud 112. Une tension électrique V est appliquée au drain du transistor 115. La grille du transistor 115 est reliée au noeud 453 de la paire 450 constituée des transistors 451 et 452.

Le rôle du transistor 115 est le suivant.

On sait qu'un transistor de type N conduit bien un niveau logique bas appliqué à sa source vers son drain lorsque sa grille est portée au niveau logique haut tandis qu'il conduit avec une perte de signal un niveau logique haut appliqué à sa source vers son drain lorsque sa grille est portée au niveau logique haut.

Ainsi, les transistors 113 et 114 des moyens 109 conduisent avec une perte de niveau lorsque $A_i$ et $B_i$ sont portés à un niveau logique haut $(A_i = B_i = 1)$.

Pour remédier à cet inconvénient, le transistor 115 porte au noeud 112 le signal $(\overline{A_i \oplus B_i})$ à l'état logique haut lorsque le signal $(A_i \oplus B_i)$ appliqué à sa grille est au niveau logique bas (c'est-à-dire $A_i = B_i = 0$ ou 1).

Pour réduire le nombre de transistors dans un dispositif de calcul binaire, un aspect de l'invention réside en les dispositions ci-après.

D'une première part, les premiers moyens forment un premier opérateur à deux entrées et une sortie pour produire le signal $(A_i \oplus B_i)$ à partir des deux bits d'entrée $(A_i, B_i)$, ledit premier opérateur possède en outre au moins une sortie supplémentaire délivrant l'un des signaux complémentés $(\overline{A_i})$, $(\overline{B_i})$, $(\overline{A_i \oplus B_i})$.

D'une seconde part, les seconds moyens forment un second opérateur à deux entrées et une sortie pour produire un signal de résultat à partir du signal de report amont $(R_i-1)$ ou de son complément $(\overline{R_i-1})$ et du signal $(A_i \oplus B_i)$ ou de son complément $(\overline{A_i \oplus B_i})$ délivré par les premiers moyens, ledit second opérateur possède en outre au moins une sortie supplémentaire délivrant l'un de ces signaux d'entrée.

D'une troisième part, parmi les signaux $(A_i)$, $(B_i)$, $(A_i \oplus B_i)$, $(R_i-1)$ et leur complément, nécessaires au fonctionnement des troisièmes moyens calculant le report aval $(R_i)$, au moins deux d'entre eux peuvent être amenés par les sorties supplémentaires des premiers et seconds moyens, ce qui permet de réduire le nombre de transistors.

Ainsi, les Demandeurs ont remarqué notamment que la sortie supplémentaire définie par le noeud 112 des moyens 109 peut amener le signal $(\overline{A_i \oplus B_i})$ aux troisièmes moyens 350. De même la sortie supplémentaire définie par le noeud 453 à partir duquel part le signal $(A_i \oplus B_i)$ vers l'une des entrées des seconds moyens 250 peut amener le signal $(A_i \oplus B_i)$ aux troisièmes moyens 350.

Une autre caractéristique de l'invention est aussi d'utiliser des sorties supplémentaires prévues dans les premiers et seconds moyens et susceptibles d'amener des signaux nécessaires zu calcul du report aval $(R_i)$. Cette caractéristique sera égale-

ment présente dans les dispositifs de calcul binaire décrits ci-après.

L'invention a également pour objet un dispositif à plusieurs cellules en parallèle, agencé en module additionneur à report propagé. La simple juxtaposition de n additionneurs décrits en référence aux figures 2 et 3 ne convient pas car un ensemble de transistors se trouvent reliés entre eux en série, formant une chaîne linéaire dont le schéma équivalent est un réseau de cellules RC. Le délai F entre le signal de sortie et celui de l'entrée dans un tel dispositif est très élevé.

Une première variante du dispositif de l'invention a juste ment pour objet de remédier à cet inconvénient.

On se réfère maintenant à la figure 4 qui illustre cette première variante et qui représente une vue schématique d'un additionneur 6 complet à trois entrées sur un bit, à report propagé comportant 18 transistors conformément à l'invention.

L'additionneur 6 est obtenu en modifiant l'additionneur 4 décrit en référence à la figure 3, en ajoutant à l'entrée du report amont ($R_{i-1}S$) une paire 500 constituée d'un transistor 501 à canal P et d'un transistor 502 à canal N, et en ajoutant au signal de report aval ($R_iS$) une paire 600 constituée d'un transistor 601 à canal P et d'un transistor 602 à canal N. Les transistors 501 et 502 de la paire 500 et les transistors 601 et 602 de la paire 600 sont agencés de façon à inverser respectivement le signal de report amont ($R_{i-1}S$) et le signal de report aval ($R_iS$) comme le faisaient les transistors 451 et 452 de la paire 450 décrite en référence à la figure 3 pour le signal OU exclusif complémenté des deux bits d'entrée ($\overline{A_i \oplus B_i}$).

Le transistor 115 des premiers moyens 109 de l'additionneur 4 décrit en référence à la figure 3 a disparu dans les premiers moyens 130 de l'additionneur 6 décrit en référence à la figure 4 car son rôle est maintenant tenu par les paires 500 et 600.

Les autres moyens 260, 360 et 460 de l'additionneur 6 sont identiques respectivement aux moyens 250, 350 et 450 de l'additionneur 4 décrit en référence à la figure 3.

Le report amont ($R_{i-1}S$) et le report aval ($R_iS$) sont complémentés respectivement par la paire 500 et la paire 600.

On utilise la complémentation des reports pour réduire le temps de propagation du report dans un dispositif à plusieurs additionneurs.

Ainsi, le premier additionneur de deux additionneurs adjacents d'un tel dispositif comprend un report amont ($R_{i-1}S$) et un report aval complémenté ($\overline{R_iS}$). Le second additionneur des deux additionneurs adjacents comprend un report amont ($\overline{R_iS}$) complémenté et un report aval ($R_{i+1}S$). Un tel dispositif n'augmente seulement le temps de propagation du report que du délai correspondant au délai de propagation du report dans une paire de transistors 500, par rapport à un additionneur constitué de deux additionneurs juxtaposés décrit en référence aux figures 2 et 3.

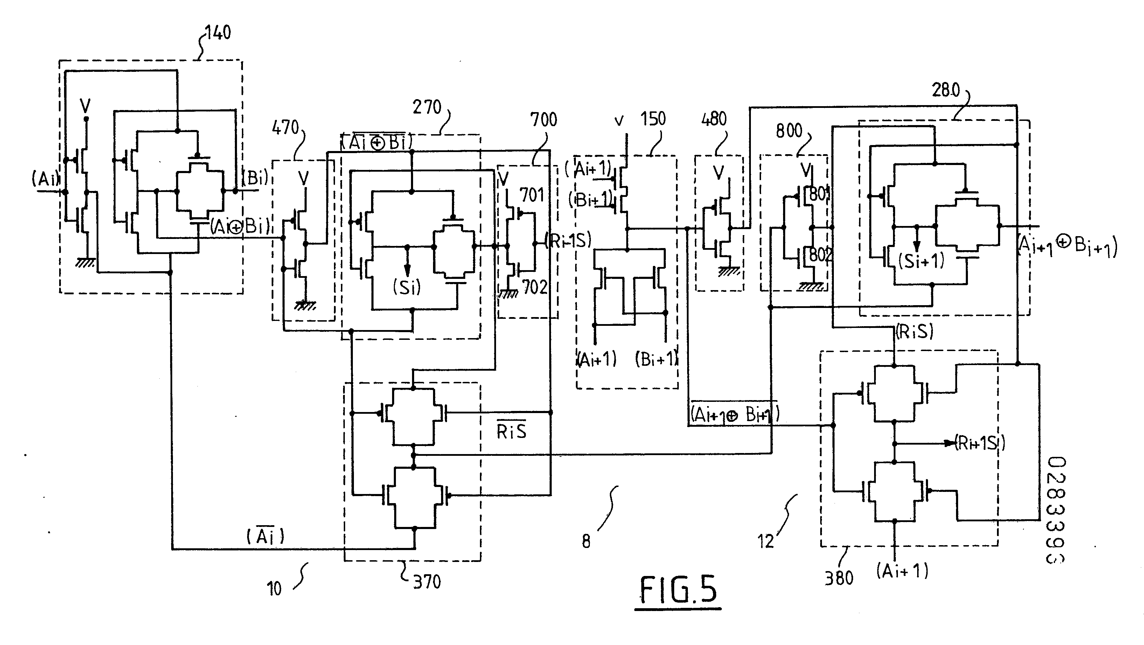

On se réfère maintenant à la figure 5 qui représente schématiquement un additionneur complet sur deux bits à report propagé comportant 34 transistors conformément à l'invention.

L'additionneur 8 comprend un additionneur 10 comme celui décrit en référence à la figure 2 et un additionneur 12 comme celui décrit en référence à la figure 4.

Les moyens 140, 470, 270 et 370 de l'additionneur 10 sont identiques respectivement aux moyens 100, 400, 200 et 300 de l'additionneur 2 décrit en référence à la figure 2.

Le report amont ($R_{i-1}S$) de l'additionneur 10 est complémenté par une paire 700 de transistors 701 et 702 agencés de la même façon que les transistors 401 et 402 de la paire 400 décrits en référence à la figure 2.

Les moyens 150, 480, 280 et 380 sont identiques respectivement aux moyens 130, 460, 260 et 360 de l'additionneur 6 décrit en référence à la figure 4.

Le report amont ($R_iS$) de l'additionneur 12 est obtenu par complémentation du report aval ($R_iS$) de l'additioneur 10 par une paire 800 constituée des transistors 801 et 802 agencés de la même façon que ceux de la paire 700.

L'additionneur 8 permet une amélioration du temps de propagation du report d'un délai correspondant à la moitié du délai de propagation du report dans une paire 700 par rapport à un additionneur constitué de deux additionneurs juxtaposés décrits en référence à la figure 4.

Quand is s'agit de réaliser un additionneur-soustracteur avec une entrée de report amont ($R_{i-1}D$) une autre fonction OU exclusif du report amont ($R_{i-1}D$) avec le signal de OU exclusif de deux bits ($A_i \oplus B_i$) et son complément ($A_i \oplus B_i$) permet également de calculer le complément de la somme modulo du premier bit ($A_i$), du second bit ($B_i$) et du report amont ($R_{i-1}D$). Le signal de résultat produit par cette fonction est la différence ($D_i$) des deux bits ($A_i, B_i$).

On peut remarquer que les signaux de OU exclusif des deux bits d'entrée ($A_i \oplus B_i$) et son complément ($A_i \oplus B_i$) sont nécessaires pour la réalisation du schéma électrique fournissant d'une part la somme ($S_i$) et d'autre part la différence ($D_i$) des deux bits. Il suffit donc de réaliser une seule fois le signal OU exclusif des deux bits ($A_i \oplus B_i$) pour calculer les opérations d'addition et de soustraction des deux bits.

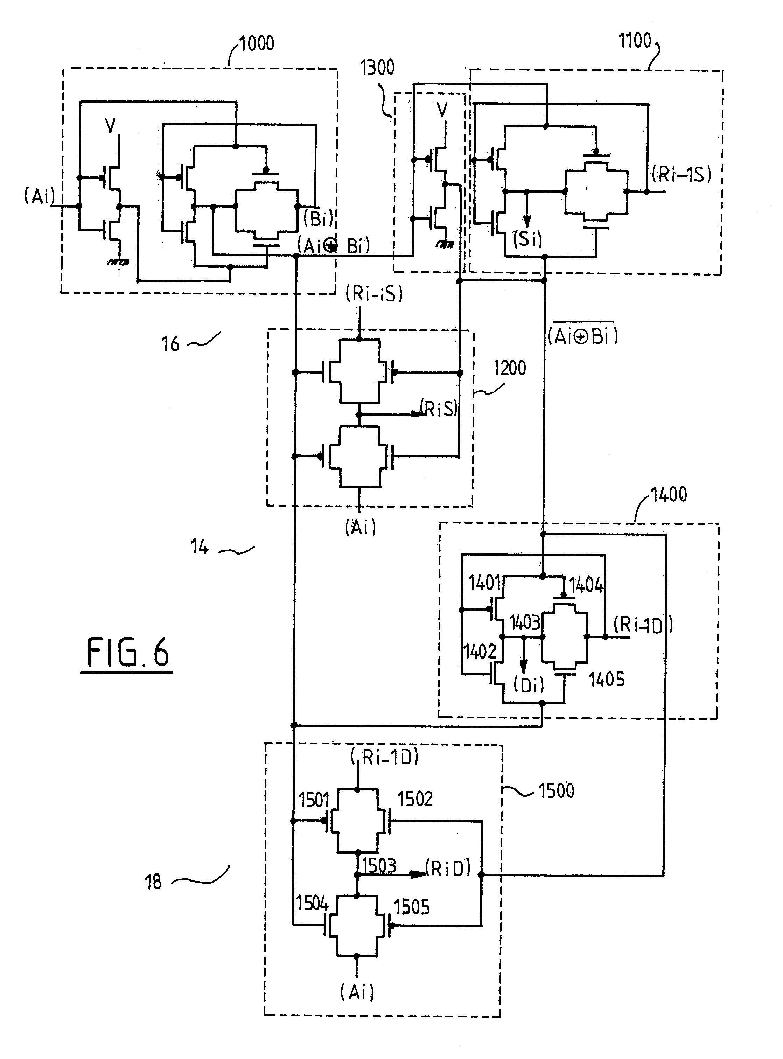

On se réfère maintenant à la figure 6 qui représente schématiquement un additionneur-soustracteur complet à quatre entrées ($A_i$),($B_i$),($R_{i-1}S$) et ($R_{i-1}D$) sur un bit comportant 24 transistors, conformément à l'invention.

L'additionneur-soustracteur 14 se compose d'un additionneur 16 et d'un soustracteur 18.

L'additionneur 16 est identique à celui décrit en référence à la figure 2. Il comprend un module 1000 calculant le signal de OU exclusif ($A_i \oplus B_i$). Le module 1000 est constitué de transistors agencés de la même façon que ceux des premiers moyens 100 décrits en référence à la figure 2. L'additionneur 16 comprend encore un module 1100 calculant la somme ($S_i$) des trois bits d'entrée ($A_i, B_i$ et $R_{i-1}S$). Le module 1100 est constitué de transistors agencés de la même façon que ceux des seconds moyens 200 décrits en référence à la figure 2. L'additionneur 16 comprend également un module 1200 calculant le

report aval (R$_i$S) associé à la somme des trois bits d'entrée (A$_i$,B$_i$ et R$_{i-1}$S). Le module 1200 est constitué de transistors agencés de la même façon que ceux des troisièmes moyens 300 décrits en référence à la figure 2. L'additionneur 16 comprend enfin une paire 1300 de transistors inversant le signal OU exclusif des deux bits d'entrée (A$_i$⊕B$_i$). La paire 1300 est constituée de deux transistors agencés dela même façon que ceux de la paire 400 décrite en référence à la figure 2.

Le soustracteur 18 comprend un module 1400 calculant la différence (D$_i$) des deux bits d'entrée (A$_i$,B$_i$) en tenant compte de la retenue amont (R$_{i-1}$D) et un module 1500 calculant le report aval (R$_i$D) associé à la différence des deux bits d'entrée (A$_i$,B$_i$).

Le module 1400 comprend deux paires de transistors de polarités opposées. La première paire est consitutée des transistors 1401 et 1402. Le transistor 1401 est à canal P et le transistor 1402 est à canal N. La grille de chacun des transistors 1401, 1402 est reliée à l'entrée de report amont (R$_{i-1}$D) associée à la différence des deux bits d'entrée (A$_i$,B$_i$). Le drain du transistor 1401 est relié au signal de OU exclusif complémenté des deux bits d'entrée ($\overline{A_i⊕B_i}$). La source du transistor 1402 est reliée au signal de OU exclusif des deux bits d'entrée (A$_i$⊕B$_i$). Le signal de résultat (D$_i$) est obtenu à un noeud 1403 reliant la source du transistor 1401 au drain du transistor 1402.

La seconde paire est constituée des transistors 1404 et 1405. Le transistor 1404 est à canal P et le transistor 1405 est à canal N. Le drain de chacun des transistors 1404 et 1405 est relié au report amont (R$_{i-1}$D) associé à la différence des deux bits d'entrée. La grille du transistor 1404 est reliée au signal de OU exclusif complémenté des deux bits d'entrée ($\overline{A_i⊕B_i}$). La grille du transistor 1405 est reliée au signal de OU exclusif des deux bits d'entrée (A$_i$⊕B$_i$). Le signal de résultat (D$_i$) étant obtenu au noeud 1403 reliant la source de chacun des transistors 1404 et 1405.

Le module 1500 comprend deux paires de transistors de polarités opposées. La première paire est constituée des transistors 1501 et 1502. Le transistor 1501 est à canal P et le transistor 1502 est à canal N. La grille du transistor 1501 est reliée au signal de OU exclusif des deux bits d'entrée (A$_i$⊕B$_i$). La grille du transistor 1502 est reliée au complément du signal de OU exclusif des deux bits d'entrée ($\overline{A_i⊕B_i}$). Le drain des transistors 1501 et 1502 est relié au report amont (R$_{i-1}$D) associé à la différence des deux bits d'entrée Le signal de report aval (R$_i$D) associé à la différence des deux bits est obtenu au noeud 1503 reliant la source des transistors 1501 et 1502. La seconde paire est constituée des transistors 1504 et 1505. Le transistor 1504 est à canal N et le transistor 1505 est à canal P. La grille du transistor 1504 est reliée au signal de OU exclusif des deux bits d'entrée (A$_i$⊕B$_i$). La grille du transistor 1505 est reliée au complément du signal de OU exclusif des deux bits d'entrée ($\overline{A_i⊕B_i}$). La source de chacun des transistors 1504 et 1505 est reliée au premier bit d'entrée (A$_i$). Le signal de report aval (R$_i$D) associé à la différence des deux bits d'entrée est obtenu au noeud 1503 reliant le drain de chacun des transistors 1504 et 1505.

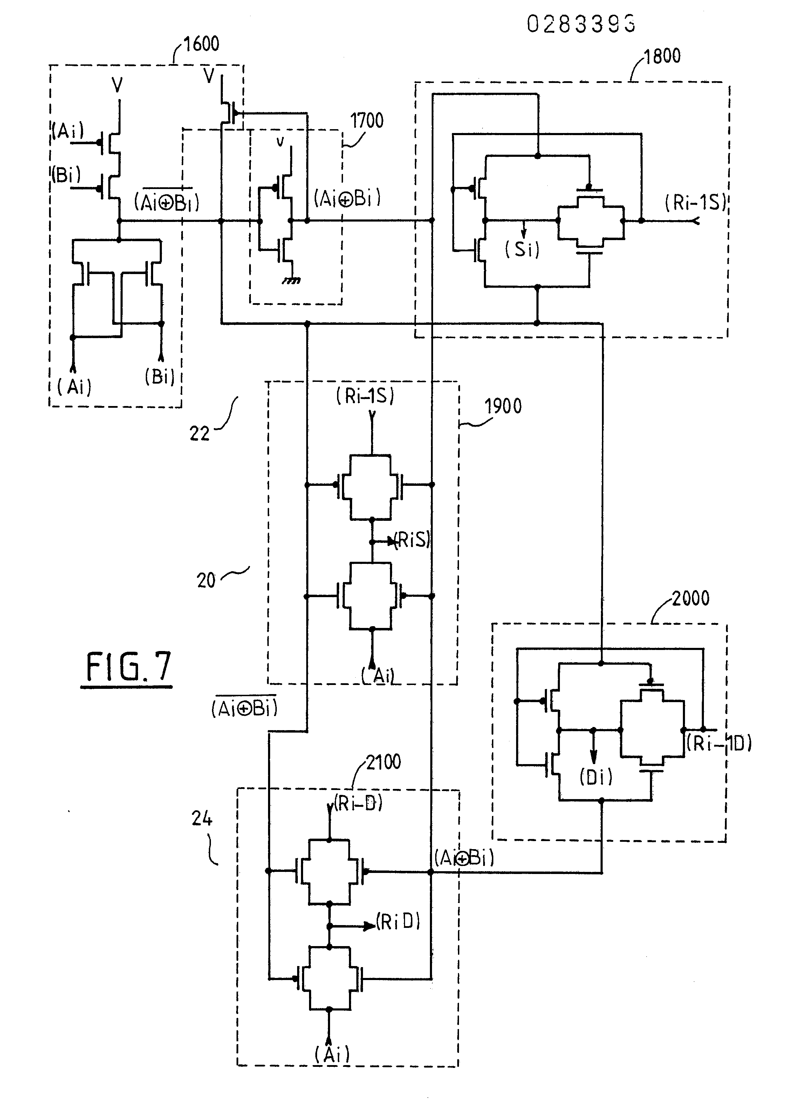

On se réfère maintenant à la figure 7 qui représente schématiquement un additionneur-soustracteur complet à quatre entrées (A$_i$),(B$_i$),(R$_{i-1}$S) et (R$_{i-1}$D) sur un bit comportant 23 transistors, conformément à l'invention.

L'additionneur-soustracteur 20 se compose d'un additionneur 22 et d'un soustracteur 24. L'additionneur 22 est identique à celui décrit en référence à la figure 3. Il comprend un module 1600 calculant le signal de OU exclusif (A$_i$⊕B$_i$). Le module 1600 est constitué de transistors agencés de la même façon que ceux des premiers moyens décrits en référence à la figure 3. L'additionneur 22 comprend encore un module 1800 calculant la somme (S$_i$) des trois bits d'entrée (A$_i$),(B$_i$) et (R$_{i-1}$S)). Le module 1800 est constitué de transistors agencés de la même façon que ceux des seconds moyens décrits en référence à la figure 2. L'additionneur 22 comprend également un module 1900 calculant le report aval (R$_i$S) associé à la somme des deux bits d'entrée (A$_i$,B$_i$). Le module 1900 est constitué de transistors agencés de la même façon que ceux des troisièmes moyens 300 décrits en référence à la figure 2. L'additionneur 22 comprend enfin un module 1700 inversant le signal OU exclusif complémenté des deux bits d'entrée ($\overline{A_i⊕B_i}$). Le module 1700 est constitué de transistors agencés de la même façon que ceux de la paire 400 décrite en référence à la figure 3.

Le soustracteur 24 comprend un module 2000 calculant la différence (D$_i$) des deux bits d'entrée (A$_i$,B$_i$) en tenant compte de la retenue amont (R$_{i-1}$D) et un module 2100 calculant le report aval (R$_i$D) associé à la différence des deux bits d'entrée (A$_i$,B$_i$). Les transistors du module 2000 sont agencés de la même façon que ceux du module 1400 décrit en référence à la figure 6. Les transistors du module 2100 sont agencés de la même façon que ceux du module 1500 décrit en référence à la figure 6.

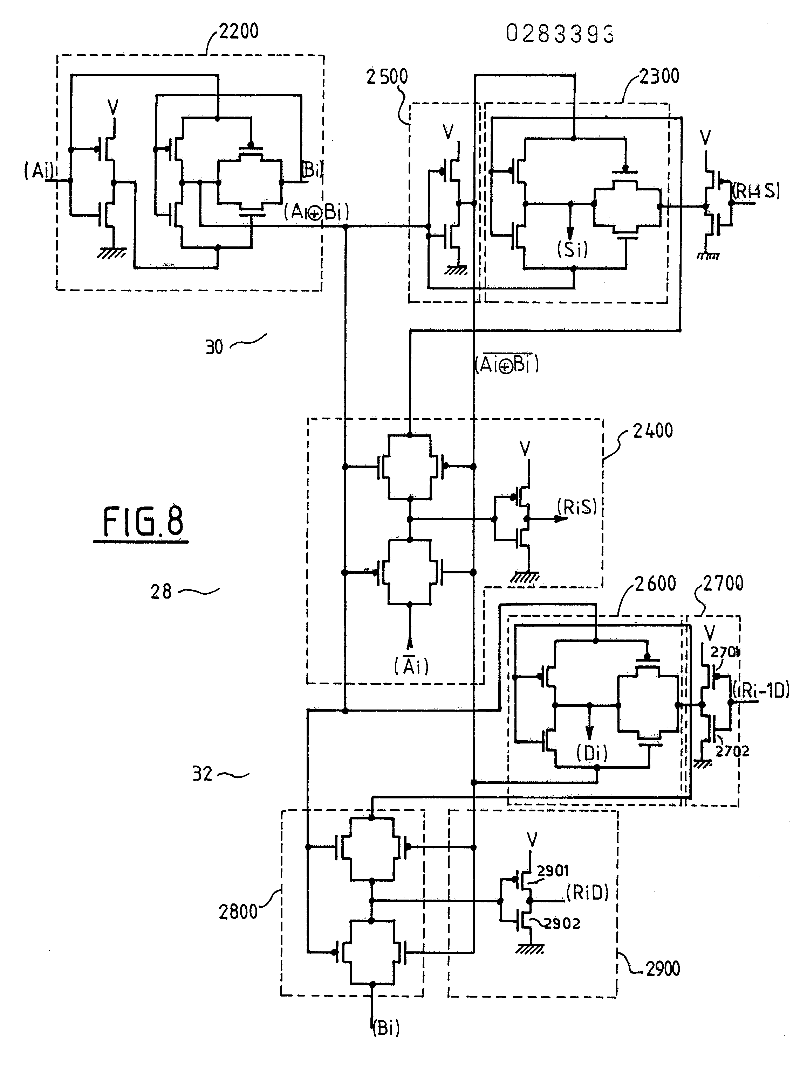

On se réfère maintenant à la figure 8 qui représente un additionneur-soustracteur complet à quatre entrées (A$_i$),(B$_i$), (R$_{i-1}$S) et (R$_{i-1}$D) sur un bit comportant 32 transistors selon l'invention.

L'additionneur-soustracteur 28 se compose d'un additionneur 30 et d'un soustracteur 32.

L'additionneur 30 est constitué d'un module 2200 calculant le signal de OU exclusif des deux bits d'entrée (A$_i$⊕B$_i$).

Le module 2200 est identique à celui des premiers moyens 100 décrits en référence à la figure 2. L'additionneur 30 est constitué également d'un module 2300 calculant la somme des deux bits (S$_i$). Le module 2300 est identique au module calculant la somme (S$_i$) des deux bits décrit en référence à la figure 4. L'additionneur 30 comprend également un module 2400 calculant le report aval (R$_i$S) associé à la somme des trois bits d'entrée (A$_i$),(B$_i$),(R$_{i-1}$S). Le module 2400 est identique au module 370 calculant le report aval (R$_i$S) associé à la somme des deux bits d'entrée décrit en référence à la figure 5. L'additionneur 30 comprend enfin un module 2500 inversant le signal de OU exclusif des deux bits d'entrée (A$_i$⊕B$_i$). Le module 2500 est identique au module 400 inversant le signal de OU exclusif (A$_i$⊕B$_i$) décrit en référence à la figure 2.

Le soustracteur 32 comprend un module 2600 calculant la différence ($D_i$) des deux bits d'entrée et de la retenue amont ($R_{i-1}D$). Le module 2600 est identique au module 2000 calculant la différence ($D_i$) des deux bits et de la retenue amont ($R_{i-1}D$) décrit en référence à la figure 7. Le soustracteur 32 comprend également un module 2800 calculant le report aval ($R_iD$) associé à la différence des deux bits ($D_i$). Le module 2800 est identique au module 2100 calculant le report aval ($R_iD$) associé à la différence des deux bits d'entrée. On ajoute à l'entrée de report amont ($R_{i-1}D$) associé à la différence des deux bits d'entrée un module 2700 constitué d'un transistor 2701 à canal P et d'un transistor 2702 à canal N. On ajoute également a signal de report aval ($R_iD$) associé à la différence des deux bits un module 2900 constitué d'un transistor 2901 à canal P et d'un transistor 2902 à canal N. Les transistors 2701 et 2702 du module 2700 et les transistors 2901 et 2902 du module 2900 sont agencés de façon à inverser respectivement le signal de report amont ($R_{i-1}D$) et le signal de report aval ($R_iD$).

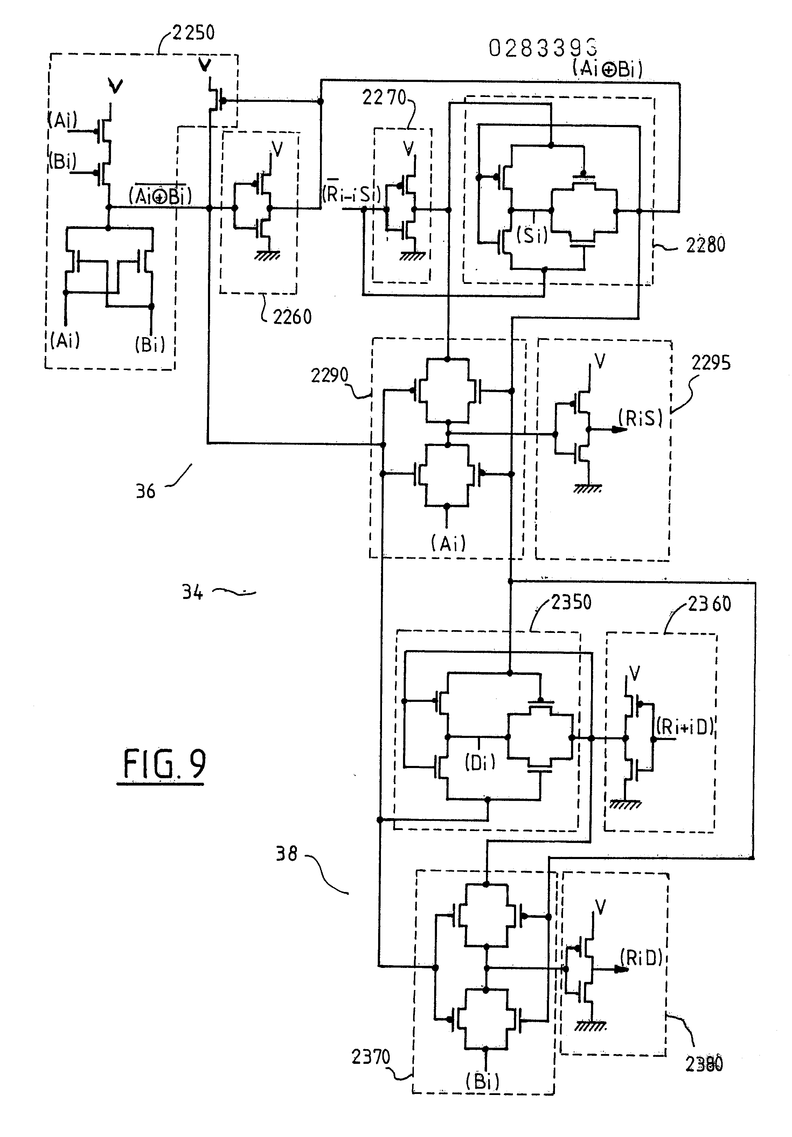

On se réfère maintenant à la figure 9 qui représente un additionneur-soustracteur complet sur un bit à report propagé comportant 31 transistors selon l'invention.

L'additionneur-soustracteur 34 comprend un additionneur 36 et un soustracteur 38. Les moyens 2250, 2260, 2270, 2280, 2290 et 2295 sont identiques respectivement aux moyens 130, 460, 500, 260, 360 et 600 de l'additionneur 6 decrit en référence à la figure 4. Les moyens 2350, 2360, 2370 et 2380 sont identiques respectivement aux moyens 2600, 2700, 2800 et 2900 du soustracteur 32 décrit en référence à la figure 8. L'additionneur 36 calcule les signaux de OU exclusif des deux bits d'entrée ($A_i \oplus B_i$) et son complément ($\overline{A_i \oplus B_i}$). Ces deux signaux sont utilisés par le soustracteur 38 pour le calcul de la différence des deux bits et le calcul de la retenue ($R_iD$) associée à la différence des deux bits.

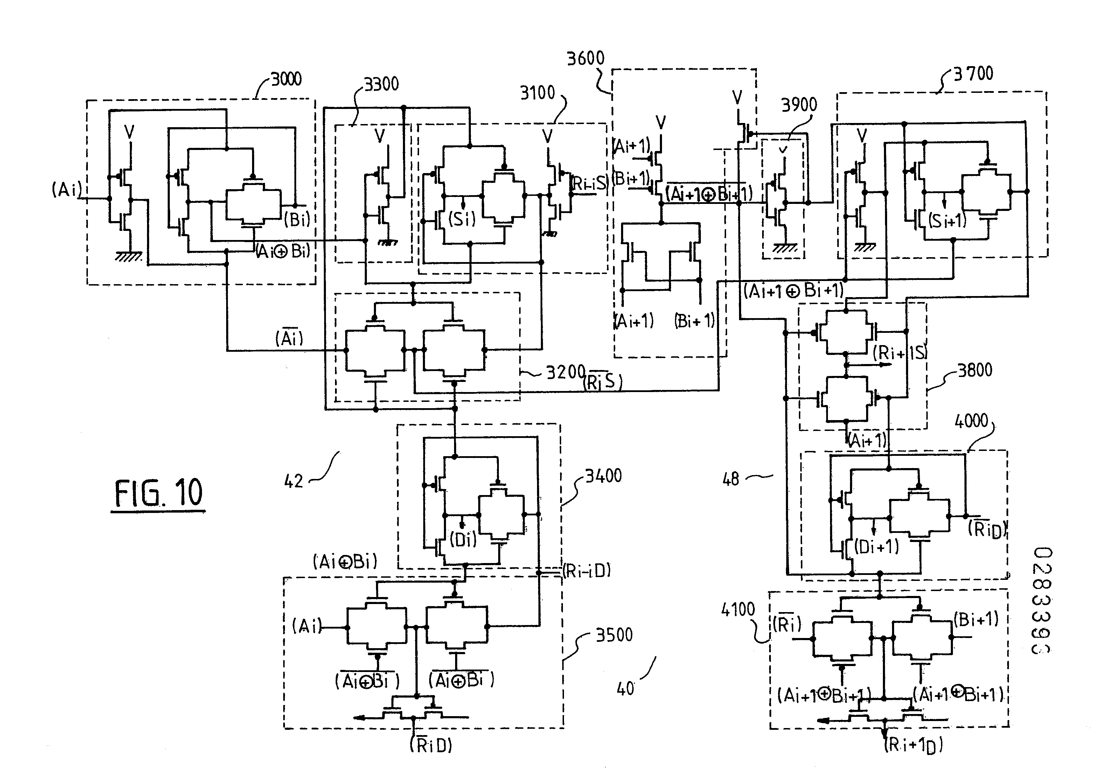

On se réfère maintenant à la figure 10 qui représente un additionneur-soustracteur complet sur deux bits comportant 55 transistors selon l'invention.

L'additonneur-soustracteur 40 sur deux bits se décompose en un additionneur-soustracteur 42 sur un bit et en un additionneur-soustracteur 48 sur un bit. L'additionneur-soustracteur 42 est identique à l'additionneur-soustracteur décrit en référence à la figure 8. L'additionneur-soustracteur est constitué d'un module 3000 calculant le signal OU exclusif des deux bits d'entrée ($A_i \oplus B_i$), d'un module 3100 calculant la somme des deux bits d'entrée, et la retenue amont ($R_{i-1}S$) d'un module 3200 calculant le report aval ($R_iS$) associé à la somme des deux bits, et d'un module 3300 inversant le signal de OU exclusif ($A_i \oplus B_i$). L'additionneur-soustracteur 42 comprend également un module 3400 calculant la différence des deux bits ($D_i$) et un module 3500 calculant le report aval ($R_iD$) associé à la différence des deux bits.

L'additionneur-soustracteur 48 est identique à l'additionneur- soustracteur décrit en référence à la figure 9. L'additionneur-soustracteur 48 comprend un module 3600 calculant le signal de OU exclusif ($\overline{A_{i+1} \oplus B_{i+1}}$), un module 3700 calculant la somme ($S_{i+1}$) des deux bits d'entrée ($A_{i+1}$) et ($B_{i+1}$) et la retenue amont ($R_iS$), un module 3800 calculant le report aval ($R_{i+1}S$) associé à la somme des deux bits d'entrée ($A_{i+1}$) et ($B_{i+1}$) et un module 3900 inversant le signal de OU exclusif complémenté des deux bits ($\overline{A_{i+1} \oplus B_{i+1}}$). L'additionneur-soustracteur 48 comprend également un module 4000 calculant la différence ($D_{i+1}$) des deux bits d'entrée et de la retenue amont ($R_iD$) et un module 4100 calculant le report aval ($R_{i+1}D$) associé à la différence des deux bits d'entrée ($A_{i+1}$) et ($B_{i+1}$).

La présente invention a également pour objet un dispositif de calcul binaire où les chiffres à calculer sont présentés séquentiellement en série, c'est-à-dire les uns après les autres, au dispositif. Chaque bit est décalé séquentiellement dans le dispositif sous la commande d'impulsions horloge en commençant par le bit de plus faible poids. Pour mémoriser le report aval associé au calcul binaire, on utilise une bascule de type D dont le fonctionnement est également commandé par l'horloge. Ainsi, on s'affranchit des problèmes de propagation du report aval à travers la bascule D.

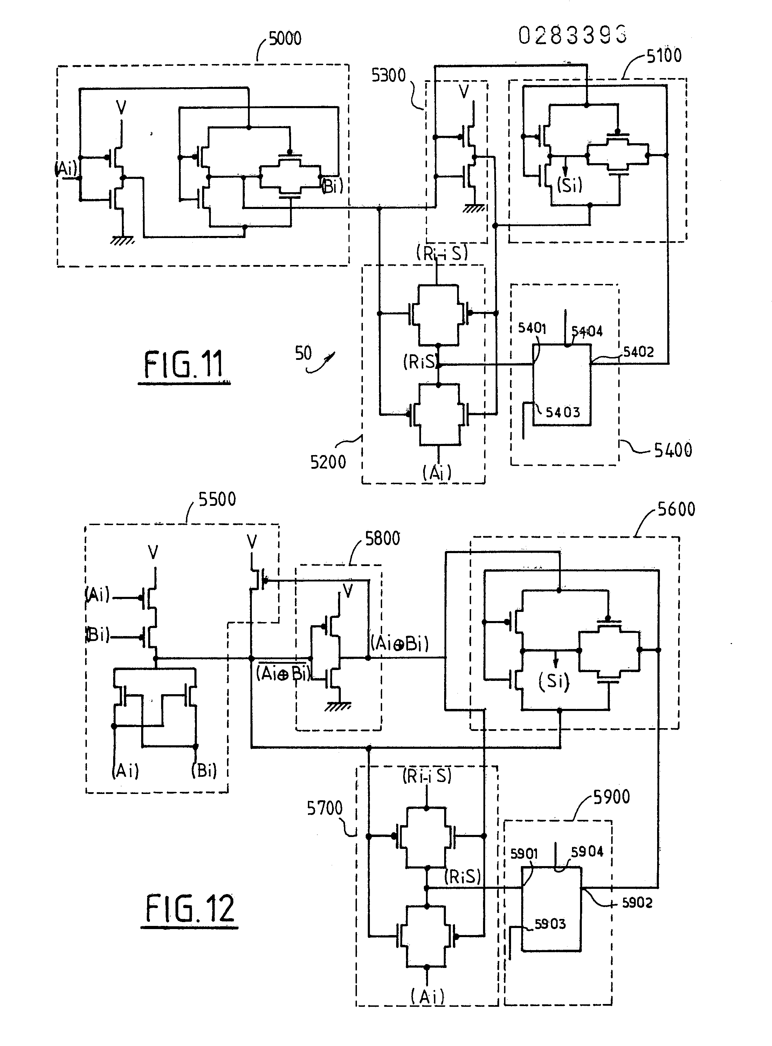

On se réfère maintenant à la figure 11 qui représente une vue schématique d'un additionneur complet à trois entrées séquentielles sur un bit comportant 16 transistors. L'additionneur 50 comprend tout d'abord un module 5000 calculant le signal de OU exclusif ($\overline{A_i \oplus B_i}$). Il comprend également un module 5100 calculant la somme des deux bits d'entrée et la retenue aval ($R_{i-1}S$). Il comprend ensuite un module 5200 calculant le report aval ($R_iS$) associé au calcul de la somme des trois bits d'entrée ($A_i$),($B_i$),($R_{i-1}S$). Il comprend enfin un module 5300 inversant le signal de OU exclusif ($A_i \oplus B_i$). Une bascule de type D 5400 est intercalée entre le module 5200 et le module 5100. L'entrée de la bascule 5401 est reliée au report aval ($R_iS$). La sortie 5402 de la bascule D est reliée au report amont ($R_{i-1}S$). L'horloge est connectée à l'entrée 5403 de la bascule D et la commande de l'initialisation de la bascule D est reliée à l'entrée 5404. La bascule D décrite précédemment fonctionne de la façon suivante :

Quand la sortie 5402 de la bascule D est initialement à l'état bas, l'application de la première impulsion d'horloge a pour effet de présenter le chiffre de plus faible poids des nombres binaires aux entrées ($A_i$) et ($B_i$) de l'additionneur. La somme ($S_i$) apparaît en sortie de l'additionneur et le report aval ($R_iS$) est appliqué à l'entrée 5401 de la bascule D. A l'impulsion d'horloge suivante, le bit suivant des nombres binaires est présenté aux entrées ($A_i$) et ($B_i$) de l'additionneur, la somme ($S_i$) précédente est envoyée dans un registre à décalage (non représenté), le report aval ($R_iS$) précédent est enregistré par la bascule et se présente à l'entrée de report amont de l'additionneur 50.

On se réfère maintenant à la figure 12 qui représente schématiquement un additionneur à trois entrées séquentielles comportant 15 transistors selon l'invention. L'additionneur 52 comprend un module 5500 calculant le signal de OU exclusif complémenté des deux bits d'entrée ($\overline{A_i \oplus B_i}$). Il

comprend également un module 5600 calculant la somme des trois bits d'entrée $(A_i)$, $(B_i)$ et $(R_{i-1}S)$. Il comprend ensuite un module 5700 calculant le report aval $(R_iS)$ associé à la somme des deux bits d'entrée. Il comprend encore un module 5800 inversant le signal de OU exclusif, complémenté, des deux bits d'entrée. Il comprend enfin une bascule de type D 5900 dont l'entrée 5901 est reliée au report aval $(R_iS)$ et dont la sortie 5902 est reliée au report amont $(R_{i-1}S)$. L'horloge est connectée à l'entrée 5903 de la bascule D et la commande de l'initialisation de la bascule D est reliée à l'entrée 5904.

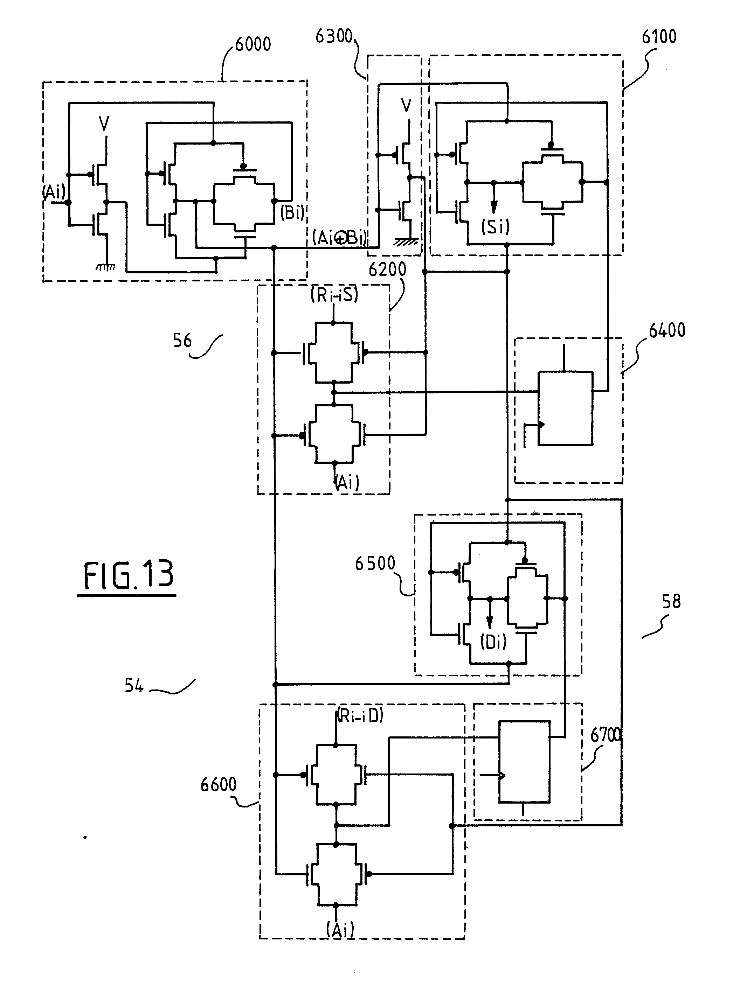

On se réfère maintenant à la figure 13 qui représente un additionneur-soustracteur à quatre entrées séquentielles comportant 24 transistors conformément à l'invention.

L'additionneur-soustracteur 54 comprend un additionneur 56 et un soustracteur 58. L'additionneur 56 est identique à l'additionneur 50 décrit en référence à la figure 11. L'additionneur 56 comprend un module 6000 calculant le signal de OU exclusif des deux bits d'entrée. L'additionneur 56 comprend encore un module 6100 calculant la somme des trois bits d'entrée $(A_i)$, $(B_i)$ et $(R_{i-1}S)$. Il comprend également un module 6200 calculant le report aval $(R_iS)$ associé à la somme des deux bits d'entrée. Il comprend encore un module 6300 inversant le signal de OU exclusif des deux bits d'entrée $(A_i \oplus B_i)$. Il comprend enfin une bascule 6400 mémorisant le report aval $(R_iS)$ associé à la somme des deux bits d'entrée. Le soustracteur 58 comprend un module 6500 calculant la différence $(D_i)$ des trois bits d'entrée $A_i$,$B_i$ et $(R_{i-1}D)$. Il comprend également un module 6600 calculant le report aval $(R_iD)$ associé à la différence des deux bits d'entrée et il comprend enfin une bascule 6700 dont l'entrée 6701 est reliée au report aval $(R_iD)$ associé à la différence des deux bits d'entrée et dont la sortie 6702 est reliée au report amont $(R_{i-1}D)$ associé à la différence des deux bits d'entrée.

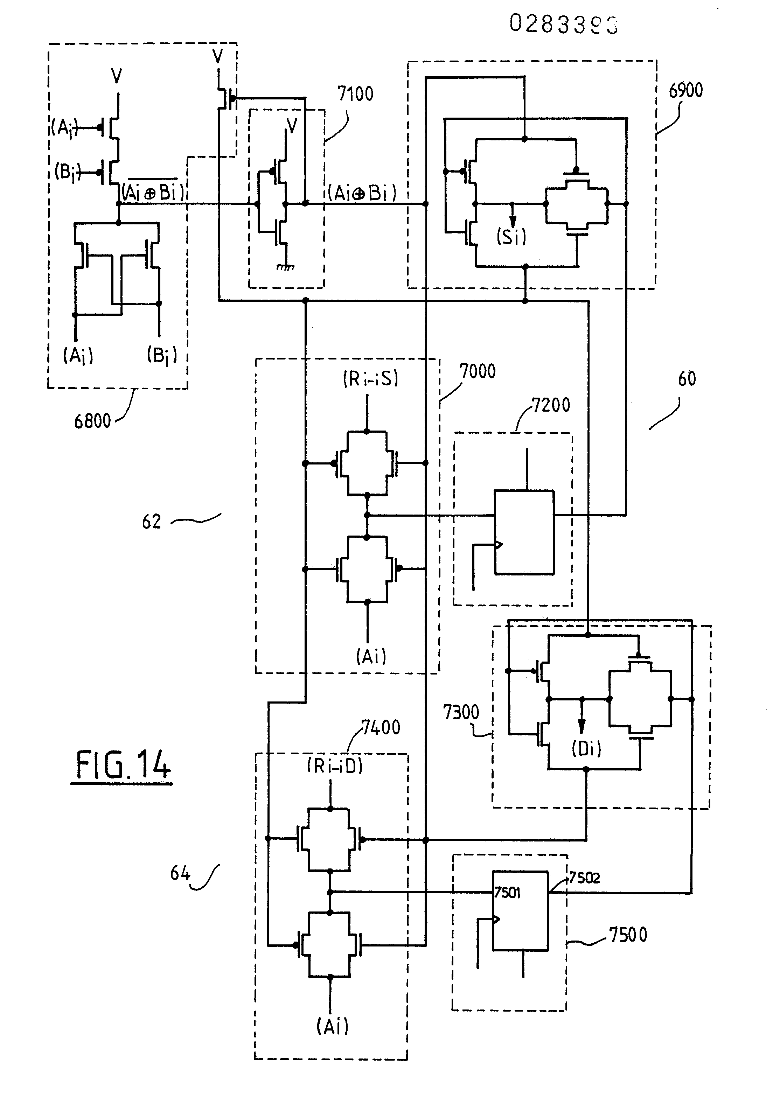

On se réfère maintenant à la figure 14 qui représente un additionneur-soustracteur à quatre entrées séquentielles comportant 23 transistors conformément à l'invention. L'additionneur-soustracteur 60 est constitué d'un additionneur 62 et d'un soustracteur 64. L'additionneur 62 est identique à l'additionneur décrit en référence à la figure 12. L'additionneur 62 comprend un module 6800 calculant le signal de OU exclusif complémenté des trois bits d'entrée, un module 6900 calculant la somme des deux bits d'entrée $(A_i)$,$(B_i)$ et $(R_{i-1}S)$, un module 7000 calculant le report aval $(R_iS)$ associé à la somme des deux bits d'entrée, un module 7100 inversant le signal de OU exclusif complémenté des deux bits d'entrée $(\overline{A_i \oplus B_i})$ et une bascule 7200 mémorisant le report aval $(R_iS)$ associé à la somme des deux bits d'entrée.

Le soustracteur 64 comprend un module 7300 calculant la différence $(D_i)$ des trois bits d'entrée $(A_i)$,$(B_i)$ et $(R_{i-1}D)$, un module 7400 calculant le report aval $(R_iD)$ associé à la différence des deux bits d'entrée et une bascule 7500 de type D dont l'entrée 7501 est reliée au report aval $(R_iD)$ associé à la différence des deux bits d'entrée et dont la sortie est reliée au report amont $(R_{i-1}D)$ associé à la différence des deux bits d'entrée.

On peut remarquer que les signaux de OU exclusif des deux bits d'entrée $(A_i \oplus B_i)$ et son complément $(\overline{A_i \oplus B_i})$ sont également nécessaires pour la réalisation d'un dispositif agencé en modules additionneurs et/ou soustracteurs à report anticipé.

La caractéristique commune du dispositif et de ses variantes objet de l'invention qui consiste à réaliser une seule fois le signal de OU exclusif des deux bits $(A_i \oplus B_i)$ et de l'inverser au moyen d'une paire de transistors complémentaires pour réaliser son complément $(\overline{A_i \oplus B_i})$, peut donc être avantageusement appliquée à la réalisation du dispositif à plusieurs cellules agencées en modules additionneurs et/ou soustracteurs à report anticipé.

Une autre caractéristique commune du dispositif et d'une majeure partie de ses variantes est d'utiliser en commun les sorties supplémentaires prévues dans les premiers et les seconds moyens pour amener des signaux nécessaires au calcul de report aval $(R_i)$ par les troisièmes moyens, ce qui permet ainsi de réduire le nombre de transistors.

**Revendications**

1.- Dispositif de calcul binaire, du type comprenant au moins une cellule possédant :
- une entrée de premiers chiffres binaires ou bits $(A_i)$,
- une entrée de seconds bits $(B_i)$,
- une entrée de report amont $(R_{i-1})$,
- des premiers moyens (100,109) pour engendrer un signal de OU exclusif des deux bits d'entrée $(A_i \oplus B_i)$ et son complément $(\overline{A_i \oplus B_i})$,
- des seconds moyens (200) pour produire un signal de résultat par une fonction OU exclusif du report amont $(R_{i-1})$ avec le signal de OU exclusif des deux bits d'entrée $(A_i \oplus B_i)$ et son complément $(\overline{A_i \oplus B_i})$,
- des troisièmes moyens (300) pour produire un signal de report aval $(R_i)$ par une fonction de transmission comprenant deux portes de transmission commandées par le signal de OU exclusif des deux bits d'entrées $(A_i \oplus B_i)$ et son complément $(\overline{A_i \oplus B_i})$, l'une des portes permettant le passage du signal du report amont $(R_{i-1})$ et l'autre des portes permettant le passage de l'un des deux signaux des bits d'entrée $(A_i,B_i)$,
ce dispositif étant caractérisé par le fait que le signal de OU exclusif complémenté des deux bits $(\overline{A_i \oplus B_i})$ est produit par inversion du signal $(A_i \oplus B_i)$.

2.- Dispositif selon la revendication 1, caractérisé en ce que les premiers moyens (100) comprennent une paire de transistors (101,102) de polarités opposées, la grille de chacun des transistors (101,102) étant reliée à l'entrée de premiers bits $(A_i)$, une tension électrique positive étant appliquée au drain de l'un (101) des transistors, la masse étant appliquée à la source de l'autre transistor (102), la source de l'un (101) des transistors et le drain de l'autre (102) transistor étant reliés à un premier noeud (103), que les premiers moyens (100) comprennent encore une paire de transistors (104,105) de polarités opposées, le drain de l'un (104) des transistors étant relié à l'entrée de premier bit (A$_i$) et la source de l'autre transistor (105) étant reliée au premier noeud (103), la grille de chacun des transistors (104,105) étant reliée à l'entrée de seconds bits (B$_i$), la source de l'un (104) des transistors et le drain de l'autre (105) transistor étant reliés à un second noeud (106) et que les premiers moyens (100) comprennent enfin une paire de transistors (107,108) de polarités opposées, la source de chacun des transistors (107,108) étant reliée au second noeud (106), le drain de chacun des deux transistors (107,108) étant relié à l'entrée de seconds bits (B$_i$), la grille de l'un (107) des transistors étant reliée à l'entrée de premiers bits (A$_i$) et la grille de l'autre (108) transistor étant reliée au premier noeud (103), le signal OU exclusif des deux bits d'entrée (A$_i \oplus$B$_i$) étant obtenu au second noeud (106).

3.- Dispositif selon les revendications 1 et 2, caractérisé en ce que pour réaliser l'inversion du signal de OU exclusif des deux bits d'entrée (A$_i \oplus$B$_i$), les premiers moyens (100) comprennent en outre une paire (400) de transistors (401,402) de polarités opposées, la grille de chacun des transistors (401,402) étant reliée au signal de OU exclusif des deux bits d'entrée (A$_i \oplus$B$_i$), une tension électrique étant appliquée au drain de l'un (401) des transistors, la masse étant appliquée à la source de l'autre (402) transistor, le signal de OU exclusif complémenté des deux bits d'entrée ($\overline{A_i \oplus B_i}$) étant obtenu au noeud (403) reliant la source de l'un (401) des transistors au drain de l'autre transistor (402).

4.- Dispositif selon la revendication 1, caractérisé en ce que les premiers moyens (109) comprennent une première paire de transistors (110,111) de même polarité, la grille de l'un (110) des transistors étant reliée à l'entrée de premiers bits (A$_i$), la grille de l'autre (111) des transistors étant reliée à l'entrée de seconds bits (B$_i$), une tension électrique étant appliquée au drain de l'un (110) des transistors, la source de l'un (110) des transistors étant reliée au drain de l'autre (111) des transistors, la source de l'autre (111) des transistors étant reliée à un troisième noeud (112), que les premiers moyens (109) comprennent encore une seconde paire de transistors (113,114) de polarités opposées à celles des transistors (110,111), le drain de l'un (113) des transistors étant relié à l'entrée de premiers bits (A$_i$), la grille de l'un (113) des transistors étant reliée à l'entrée de seconds bits (B$_i$), le drain de l'autre (114) des transistors étant reliée à l'entrée de seconds bits (B$_i$), la grille de l'autre (114) des transistors étant reliée à l'entrée de premiers bits (A$_i$), la source de chacun des transistors (113,114) étant reliée au troisième noeud (112), et que les premiers moyens (109) comprennent enfin un transistor isolé (115), la source dudit transistor (115) étant reliée à une tension électrique positive, la grille dudit transistor (115) étant reliée au signal de OU exclusif des deux bits d'entrée (A$_i \oplus$B$_i$), le drain dudit transistor (115) étant relié au troisième noeud (112) où est obtenu le signal de OU exclusif complémenté des deux bits d'entrée ($\overline{A_i \oplus B_i}$).

5.- Dispositif selon les revendications 1 à 4, caractérisé en ce que pour réaliser l'inversion du signal de OU exclusif des deux bits d'entrée (A$_i \oplus$B$_i$), les premiers moyens (109) comprennent en outre une paire (450) de transistors (451,452) de polarités opposées, la grille de chacun des transistors (451,452) étant reliée au signal de OU exclusif complémenté des deux bits d'entrée ($\overline{A_i \oplus B_i}$), une tension électrique étant appliquée au drain de l'un (451) des transistors, la masse étant appliquée à la source de l'autre (452) des transistors, le signal de OU exclusif des deux bits d'entrée (A$_i \oplus$B$_i$) étant obtenu au noeud (453) reliant la source de l'un des transistors au drain de l'autre transistor.

6.- Dispositif selon l'une quelconque des revendications 1 à 5, caractérisé en ce que pour produire le signal de somme (S$_i$) des trois bits d'entrée (A$_i$),(B$_i$) et (R$_{i-1}$), les seconds moyens calculent la somme modulo de premiers bits (A$_i$), de seconds bits (B$_i$) et du report amont (R$_{i-1}$).

7.- Dispositif selon l'une quelconque des revendications 1 à 5, caractérisé en ce que pour produire la signal de différence (D$_i$) des trois bits d'entrée (A$_i$),(B$_i$) et (R$_{i-1}$), les seconds moyens (200) calculent le complément de la somme modulo de premiers bits (A$_i$), de seconds bits (B$_i$) et du report amont (R$_{i-1}$).

8.- Dispositif selon l'une quelconque des revendications 1 à 7, caractérisé en ce que pour produire le signal de report aval (R$_i$) associé au signal de résultat du calcul des trois bits (A$_i$),(B$_i$) et (R$_{i-1}$), les troisièmes moyens (300) calculent la somme du produit des deux bits, du produit de l'un des deux bits (A$_i$,B$_i$) par le report amont (R$_{i-1}$) et du produit de l'autre des deux bits (A$_i$,B$_i$) par le report amont (R$_{i-1}$), le signal produit par ladite fonction étant le report aval (R$_i$).

9.- Dispositif selon l'une quelconque des revendications 1 à 8, caractérisé en ce que les deuxièmes moyens (200) comprennent deux paires de transistors de polarités opposées, dans l'une des deux paires la grille de chacun des transistors (201,202) étant reliée à l'entrée de report amont (R$_{i-1}$), le drain de l'un (201) des transistors étant relié au signal de OU exclusif des deux bits d'entrée (A$_i \oplus$B$_i$), la source de l'autre (202) transistor étant reliée au complément du signal de OU exclusif des deux bits d'entrée ($\overline{A_i \oplus B_i}$), le signal de résultat étant obtenu à un quatrième noeud (203) reliant la source de l'un (201) des transistors au drain de l'autre (202) transistor, dans l'autre des deux paires le drain de chacun des transistors (204,205) étant relié au report amont ($R_{i-1}$), la grille de l'un (204) des transistors étant reliée au signal de OU exclusif des deux bits d'entrée ($A_i \oplus B_i$) et la grille de l'autre (205) des transistors étant reliée au complément du signal de OU exclusif des deux bits d'entrée ($\overline{A_i \oplus B_i}$), le signal de résultat étant obtenu au quatrième noeud (203) reliant la source de chacun des transistors (204,205).

10.- Dispositif selon l'une quelconque des revendications 1 à 9, caractérisé en ce que les troisièmes moyens (300) comprennent deux paires de transistors de polarités opposées, dans l'une des deux paires : la grille de l'un (301) des transistors étant reliée au signal de OU exclusif des deux bits d'entrée ($A_i \oplus B_i$) et la grille de l'autre (302) transistor étant reliée au complément du signal de OU exclusif des deux bits d'entrée ($\overline{A_i \oplus B_i}$), le drain de chacun des transistors (301,302) étant relié au report amont ($R_{i-1}$), le signal de report aval ($R_i$) étant obtenu à un cinquième noeud (303) reliant la source de chacun des transistors (301,302), dans l'autre des deux paires la grille de l'un (304) des transistors étant reliée au signal de OU exclusif des deux bits d'entrée ($A_i \oplus B_i$) et la grille de l'autre (305) transistor étant reliée au complément de signal de OU exclusif des deux bits d'entrée ($\overline{A_i \oplus B_i}$), la source de chacun des transistors (304,305) étant reliée à l'entrée de premiers bits ($A_i$), le signal de report aval ($R_i$) étant obtenu au cinquième noeud (303) reliant le drain de chacun des transistors (304,305).

11.- Dispositif à plusieurs cellules en parallèle agencées en module additionneur à report propagé, selon l'une quelconque des revendications 1 à 10, caractérisé en ce que la première cellule des deux cellules adjacentes comprend un report amont ($R_{i-1}$) et un report aval complémenté ($\overline{R_i}$) et que la seconde cellule des deux cellules adjacentes comprend un report amont complémenté ($\overline{R_i}$) et un report aval ($R_{i+1}$).

12.- Dispositif selon la revendication 11, caractérisé en ce que le complément ($\overline{R_i}$) du signal de report aval de la première cellule de deux cellules adjacentes et le complément ($\overline{R_i}$) de signal de report amont de la seconde cellule des deux cellules adjacentes, sont obtenus respectivement par une paire de transistors de polarités opposées, la grille de chacun des transistors étant reliée au signal de report aval ($R_i$) de la première cellule, respectivement au signal de report amont ($R_i$) de la seconde cellule, une tension électrique étant appliquée au drain de l'un des transistors, la masse étant appliquée à la source de l'autre transistor, le signal de report aval complémenté ($\overline{R_i}$) de la première cellule et le signal de report amont complémenté ($\overline{R_i}$) de la seconde cellule étant respectivement obtenus au noeud reliant la source de l'un des transistors au drain de l'autre transistor.

13.- Dispositif pour calculer des mots binaires de n bits, dans lequel les bits se présentent séquentiellement en série aux entrées de la cellule selon les revendications 1 à 12, caractérisé en ce que la cellule comprend en outre des quatrièmes moyens pour mémoriser la retenue aval ($R_i$).

14.- Dispositif selon la revendication 13, caractérisé en ce que les quatrièmes moyens sont des bascules de type D, le report aval ($R_i$) étant relié à l'entrée de la bascule et le report amont ($R_{i-1}$) étant relié à la sortie de la bascule.

15.- Dispositif selon les revendications 1 à 14, caractérisé en ce que le dispositif comprend une cellule d'addition calculant la somme ($S_i$) des trois bits d'entrée ($A_i$),($B_i$) et ($R_{i-1}$) et une cellule de soustraction calculant la différence ($D_i$) des trois bits d'entrée ($A_i$),($B_i$) et ($R_{i-1}$), les premiers moyens produisant le signal de OU exclusif ($A_i \oplus B_i$) et son complément étant utilisés en commun par la cellule d'addition et celle de soustraction.

16.- Dispositif à plusieurs cellules en parallèle selon la revendication 15, caractérisé en ce que le dispositif est agencé en modules additionneurs/soustracteurs à report propagé.

17.- Dispositif à plusieurs cellules en parallèle selon la revendication 15, caractérisé en ce que le dispositif est agencé en modules additionneurs/soustracteurs dans lesquels les bits d'entrée se présentent séquentiellement en série aux entrées des cellules.

18.- Dispositif à plusieurs cellules en parallèle selon la revendication 15, caractérisé en ce que le dispositif est agencé en modules additionneurs et/ou soustracteurs à report anticipé.

FIG.1

0283393

FIG. 2

0283393

FIG.3

FIG.4

FIG.5

0283393

## FIG.6

FIG.7

0283393

FIG.8

0283393

FIG. 9

FIG. 10

## FIG.11

0283393

## FIG.12

FIG.13

FIG.14

**Office européen des brevets**

**RAPPORT DE RECHERCHE EUROPEENNE**

Numero de la demande

EP  88 40 0589

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | PROCEEDINGS OF THE IEEE INTERNATIONAL CONFERENCE ON COMPUTER DESIGN: VLSI IN COMPUTERS, ICCD' 85, New York, 7-10 octobre 1985, pages 359-362, IEEE; S. STEINLECHNER et al.: "Carry-save adders and their application for a multiplication with factored multiplicands" * Colonne 4. ligne 29 - colonne 5, ligne 17; figure 5 * | 1-3,6,8 -10 | G 06 F    7/50 |
| Y | Idem | 4,5 | |
| Y | PATENT ABSTRACTS OF JAPAN, vol. 9, no. 140 (E-321)[1863], 14 juin 1985; & JP-A-60 21 629 (MITSUBISHI DENKI K.K.) 04-02-1985 * Résumé; figure * | 4,5 | |
| X | US-A-3 767 906  (RCA) * Texte relatif à la figure 1; figures * | 1,6 | DOMAINES TECHNIQUES RECHERCHES (Int. Cl.4) |
| X | EP-A-0 096 333  (TOSHIBA) * Texte relatif aux figures 4-6; figures 4-6 * | 1,6 | G 06 F    7/00 |
| A | | 4,5,11, 12 | |
| A | EP-A-0 143 456  (TOSHIBA) * Résumé; figures * | 11,12 | |
| A | EP-A-0 185 504  (RCA) * Résumé; figure 2 * | 7,8 | |
|   |                                  -/- | | |

Le présent rapport a été établi pour toutes les revendications

| Lieu de la recherche | Date d'achèvement de la recherche | Examinateur |
|---|---|---|
| LA HAYE | 27-05-1988 | NUSSBAUMER C.P. |

EPO FORM 1503 03.82 (P0402)

Office européen
des brevets

## RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | INTERNATIONAL JOURNAL OF MINI & MICROCOMPUTERS, vol. 7, no. 2, 1985, pages 49-52, Anaheim, California, US; D.I. MOLDOVAN et al.: "Bit serial techniques in VLSI parallel processing" * Figure 5 * ----- | 13,14 | |

DOMAINES TECHNIQUES RECHERCHES (Int. Cl.4)

Le présent rapport a été établi pour toutes les revendications

| Lieu de la recherche | Date d'achèvement de la recherche | Examinateur |
|---|---|---|
| LA HAYE | 27-05-1988 | NUSSBAUMER C.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................
& : membre de la même famille, document correspondant

EPO FORM 1503 03.82 (P0402)